# EUROPÄISCHE PATENTSCHRIFT

(11) **EP 2 583 341 B1**
(45) Veröffentlichungstag und Bekanntmachung des Hinweises auf die Patenterteilung: **10.08.2016**
(21) Anmeldenummer: 11730900.5
(22) Anmeldetag: 14.05.2011
(51) Int. Cl.: H01M 8/04

(54) **VORRICHTUNG ZUR BEFEUCHTUNG VON ANODENGAS**
DEVICE FOR HUMIDIFICATION OF ANODE GAS
APPAREIL POUR L'HUMIDIFICATION DU GAZ ANODIQUE

(30) Priorität: 17.06.2010 DE 102010024187
(43) Veröffentlichungstag der Anmeldung: 24.04.2013
(73) Patentinhaber: Daimler AG, 70327 Stuttgart (DE)
(72) Erfinder: DEHN, Steffen, 89278 Nersingen (DE); QUINTUS, Martin, 73035 Göppingen (DE); STERK, Felix, 88281 Schlier (DE)
(74) Vertreter: JENSEN & SON
(86) Internationale Anmeldenummer: PCT/EP2011/002401
(87) Internationale Veröffentlichungsnummer: WO 2011/157334

(56) Entgegenhaltungen:
- JP-A- 2003 257 465
- US-A- 5 441 821
- US-A1- 2001 021 468
- US-A1- 2007 048 572

## Beschreibung

Die Erfindung betrifft eine Vorrichtung zur Befeuchtung eines Anodenraums einer Brennstoffzelle und/oder eines zu dem Anodenraum der Brennstoffzelle strömenden Gasstroms nach der im Oberbegriff von Anspruch 1 näher definierten Art.

Eine Brennstoffzelle beziehungsweise ein Stapel von einzelnen Brennstoffzellen, ein sogenannter Brennstoffzellenstack, wird typischerweise mit Wasserstoff auf der Anodenseite und Sauerstoff bzw. Luft auf der Kathodenseite betrieben. Der Wasserstoff, welcher der Anodenseite zuströmt, ist dabei typischerweise Wasserstoff aus einem Druckgasspeicher. Er strömt über eine Ventileinrichtung zur Druckreduzierung in den meisten Fällen unbefeuchtet in den Bereich der Anode. Der Anodenraum der Brennstoffzelle wird dabei sehr häufig mit befeuchteter Luft als Sauerstofflieferant betrieben. Dies ist sinnvoll und notwendig, da bei einer PEM-Brennstoffzelle, welche einen der am häufigsten verwendeten Typen von Brennstoffzellen, insbesondere für automobile Anwendungen, darstellt, eine gewisse Befeuchtung der Polymermembranen notwendig ist, um die Funktionalität der Zelle aufrechtzuerhalten. Im Allgemeinen ist dabei die Befeuchtung der Luft für die Kathodenseite der Brennstoffzelle vergleichsweise einfach zu realisieren und reicht zumeist aus, um eine zumindest grundlegende Befeuchtung sicherzustellen.

Der Wasserstoff wird dagegen typischerweise trocken aus dem Druckgasspeicher der Brennstoffzelle zugeführt. Dies ist insbesondere für die erste Einzeizelle in dem Brennstoffzellenstack oder bei einem kaskadiert aufgebauten Brennstoffzellenstack für die erste Reihe an Einzelzellen problematisch, da diese anodenseitig nicht befeuchtet werden. Dies verursacht im Bereich dieser Zelle beziehungsweise dieser Reihe von Einzelzellen eine schlechtere Protonenleitfähigkeit der Membranen und führt somit zu einem schlechteren elektrischen Wirkungsgrad.

Die DE 101 10 419 A1 bzw. US 2001/021468 A1 beschreibt ein Brennstoffzellensystem, bei dem Befeuchtungskonzepte sowohl auf der Anodenseite als auch auf der Kathodenseite beschrieben werden. Jedes Konzept sieht dabei vor, dass über für Wasserdampf durchlässige Membranen der Abgasstrom der Anode beziehungsweise der Kathode den jeweiligen Zustrom an Gas, also an Luft oder Sauerstoff, entsprechend befeuchtet. Außerdem ist ein Wasserabscheider vorgesehen, welcher nach dem Durchströmen des Membranbefeuchtungsmoduls verbleibendes Wasser aus den jeweiligen Abgasen in flüssiger Form abscheidet. Dieses Wasser wird dann gesammelt und über eine Pumpe sowie ein Rückschlagventil wieder dem Bereich des zu dem Anodenraum oder Kathodenraum strömenden Gases zugeführt und im Bereich dieses Gases, nachdem dieses das Membranmodul zu seiner Befeuchtung durchströmt hat, zugeführt, beispielsweise indem dieses eingespritzt wird.

Der Aufbau mit den mehreren Befeuchtungseinrichtungen in Form des Membranmoduls und einer Befeuchtung über einem Wasserabscheider gesammeltes Wasser ist dabei vergleichsweise aufwändig und damit sehr teuer. Außerdem bedarf es eines vergleichsweise großen Bauraums insbesondere im Bereich der Anode, was den entscheidenden Nachteil hat, dass hier vergleichsweise große Strömungslängen in Leitungselementen, Komponenten und dergleichen auftreten. Da eine Abdichtung für den im Inneren strömenden Wasserstoff vergleichsweise aufwändig ist und Diffusionsverluste hier praktisch unvermeidlich sind, stellt dieses einen gewissen Nachteil hinsichtlich des zu erwartenden Wasserstoffverbrauchs dar.

Außerdem ist im Bereich eines Sammelbehälters des Wasserabscheiders immer eine Wasserpumpe notwendig, sodass hierdurch ein parasitärer Leistungsbedarf entsteht, welcher den Gesamtwirkungsgrad des Brennstoffzellensystems entsprechend verschlechtert. Inwieweit dies durch eine Verbesserung der Befeuchtung der ersten Zelle beziehungsweise der ersten Zellreihe des Brennstoffzellensystems auszugleichen ist, dürfte nach den vorgenommenen Berechnungen und Untersuchungen zumindest auf der Seite des Anodenraums der Brennstoffzelle eher fraglich sein.

Für die Kathodenseite ist ähnlich wie auch in der US 2007/048572 A1 ein Konzept beschrieben, bei welchem über Druckdifferenzen eine Rückführung von Wasser erzielt wird.

Es ist die Aufgabe der hier vorliegenden Erfindung, eine Vorrichtung zur Befeuchtung eines Anodenraums einer Brennstoffzelle und/oder eines zu dem Anodenraum der Brennstoffzelle strömenden Gasstroms mit den wesentlichen Merkmalen des oben beschriebenen Stands der Technik zu schaffen, welche darüber hinaus einen sehr einfachen, kompakten und energieeffizienten Aufbau ermöglicht.

Erfindungsgemäß wird diese Aufgabe durch die im kennzeichnenden Teil von Anspruch 1 genannten Merkmale gelöst. Weitere vorteilhafte Ausgestaltungen der erfindungsgemäßen Vorrichtung ergeben sich dabei aus den hiervon abhängigen Unteransprüchen.

Der erfindungsgemäße Aufbau sieht es also vor, dass zwischen dem Anoderaum und dem Wasserabscheider eine Rückströmsicherung angeordnet ist, welche in Richtung zu dem Wasserabscheider hin durchströmbar ist. Außerdem sind Mittel zur Druckbeaufschlagung des Wasserabscheiders mittels eines Gases vorgesehen, durch welche der Druck im Bereich des Wasserabscheiders zumindest zeitweise über den Druck im Bereich der Befeuchtungseinrichtung anhebbar ist. Der Aufbau sieht es also vor, dass anstelle eines Wassersammelbehälters mit einer Pumpe zwischen dem Wasserabscheider und dem Anodenraum ein Rückschlagventil oder Ähnliches eingebaut wird, sodass dieser Abschnitt nur in Richtung des Wasserabscheiders durchströmbar ist. Über geeignete Mittel kann dann der Wasserabscheider mit einem Druck beaufschlagt werden, welcher zumindest zeitweise während des Betriebs der Brennstoffzelle über dem Druck im Bereich der Befeuchtungseinrichtung liegt. Über den höheren Druck im Bereich des Wasserabscheiders kann das darin gesammelte Wasser der Befeuchtungseinrichtung zugeführt werden und kann von dieser aus entweder den Anodenraum direkt und/oder den zum Anodenraum strömenden Gasstrom befeuchten. Erfindungsgemäß erfolgt die Druckbeaufschlagung dabei mittels eines Gases. Da im Bereich eines Brennstoffzellensystems typischerweise Gase auf verschiedenen Druckniveaus vorliegen, kann das Gas insbesondere aus einem Bereich stammen, in dem es den erforderlichen/benötigten Druck ohnehin aufweist, sodass auf die zusätzliche Leistung zur Förderung des Gases beim Betrieb des Brennstoffzellensystems gänzlich verzichtet werden kann. Um eine geeignete Druckbeeinflussung zu ermöglichen, ist in dem zum Anodenraum strömenden Gasstrom eine Ventileinrichtung angeordnet.

In einer besonders günstigen und vorteilhaften Weiterbildung der erfindungsgemäßen Vorrichtung ist es dabei vorgesehen, dass das Gas Wasserstoff aufweist. Das Gas, mit welchem der Wasserabscheider mit Druck beaufschlagt wird, kann also insbesondere Wasserstoff aufweisen oder Wasserstoff sein. Da der Wasserstoff beispielsweise im Bereich eines Druckgasspeichers ohnehin auf einem sehr hohen Druckniveau vorliegt, kann dieser ideal verwendet werden, um damit auch den Wasserabscheider mit Druck zu beaufschlagen und eine Rückförderung des abgeschiedenen Wassers in den Bereich der Anode oder in den Bereich des zur Anode strömenden Gasstroms vorzunehmen. Da Wasserstoff typischerweise auch das Gas ist, mit dem der Anodenraum der Brennstoffzelle versorgt wird, ist es unkritisch und für den Betrieb der Brennstoffzelle nicht von Nachteil, wenn das Gas durch die Druckbeaufschlagung mit in den Bereich des Anodenraums strömt, da dieses, wenn es Wasserstoff ist oder Wasserstoff aufweist, zur Brennstoffversorgung der Brennstoffzelle beitragen kann.

In einer weiteren besonders günstigen und vorteilhaften Ausgestaltung der erfindungsgemäßen Vorrichtung ist es ferner vorgesehen, dass das Gas der Abgasstrom aus dem Anodenraum ist. Insbesondere bei einer Open-End-Brennstoffzelle, beispielsweise in kaskadierter Bauweise, tritt zusammen mit dem Wasser aus dem Bereich des Anodenraumes eine gewisse Restmenge an Wasserstoff aus, welche entweder verloren ist oder beispielsweise einer Nachverbrennung zugeführt wird, um thermische Energie zurückzugewinnen und keine Wasserstoffemission an die Umweltumgebung zuzulassen. Dieses Gas aus dem Abgasstrom des Anodenraums ist dabei in seiner Zusammensetzung außerordentlich gut geeignet, um die Druckbeaufschlagung des Wasserabscheiders vorzunehmen und zusammen mit dem Wasser in den Bereich des zu dem Anodenraum strömenden Gases und/oder in den Anodenraum selbst zurückzuströmen.

In einer sehr vorteilhaften Weiterbildung der erfindungsgemäßen Vorrichtung erfolgt die Druckbeaufschlagung durch einen zumindest hinsichtlich des Betriebsdrucks dynamischen Betrieb der Brennstoffzelle. Brennstoffzellen, insbesondere Brennstoffzellen, welche zur Bereitstellung von Antriebsenergie in Fahrzeugen eingesetzt werden, werden typischerweise nicht stationär, sondern entsprechend den Leistungsanforderungen des Fahrzeugs dynamisch bis hochdynamisch betrieben. Eine solche hochdynamische Betriebsweise des Brennstoffzellensystems äußerst sich nicht nur in der Entnahme von elektrischen Leistungen mit hochdynamischem Profil, sondern resultiert auch in einer hochdynamischen Betriebsweise des Betriebsdrucks, oder ermöglicht eine solche zumindest. Die Druckbeaufschlagung des Wasserabscheiders kann nun in besonders einfacher und effizienter Weise durch einen dynamischen Betrieb hinsichtlich des Betriebsdrucks erfolgen, welcher entweder speziell für die Durchführung der Befeuchtung mit der erfindungsgemäßen Vorrichtung ausgelegt ist oder sich aufgrund des dynamischen Betriebs der Brennstoffzelle ohnehin einstellt. Kommt es nun zu einem Druckanstieg im Bereich der Brennstoffzelle, so wird sich das im Wasser im Bereich des Wasserabscheiders entsprechend ansammeln und aufgrund des höheren Drucks im Bereich des zum Anodenraum strömenden Gases nicht in den Bereich dieses Gases beziehungsweise des Anodenraums abströmen. Kommt es nun zu einer Druckabsenkung bei der Versorgung der Brennstoffzelle mit dem zum Anodenraum strömenden Gas, so wird zumindest für einen kurzen Zeitraum der Druck im Bereich des Wasserabscheiders höher sein als der Druck in dem zum Anodenraum strömenden Gas. In diesen Betriebssituationen wird sich dann das Wasser über die Befeuchtungseinrichtung in den Anodenraum beziehungsweise in das zum Anodenraum strömende Gas entleeren und diesen/dieses somit befeuchten.

In einer besonders günstigen und vorteilhaften Weiterbildung der erfindungsgemäßen Vorrichtung ist darüber hinaus zwischen dem Wasserabscheider und der Befeuchtungseinrichtung eine Rückströmsicherung angeordnet, welche in Richtung zu der Befeuchtungseinrichtung durchströmbar ist. Dies stellt sicher, dass keine Druckbeaufschlagung des Wasserabscheiders durch das zu dem Anodenraum strömende Gas erfolgt.

In einer besonders günstigen und vorteilhaften Weiterbildung der erfindungsgemäßen Vorrichtung ist es ferner vorgesehen, dass im Bereich der Befeuchtungseinrichtung Mittel zum Zerstäuben und/oder Verdampfen des Wassers vorgesehen sind. Über solche Mittel zum Zerstäuben und/oder Verdampfen kann ein Aerosol oder ein Wasserdampf erzeugt werden, welcher die Befeuchtung des Anodenraums und/oder des zu dem Anodenraum strömenden Gasstroms in einer Art und Weise realisiert, dass eine ausreichende Befeuchtung vorliegt, ohne dass durch zu viel flüssiges Wasser Teilbereiche des Anodenraums mit Wasser "geflutet" werden, und so der Kontakt von Teilen der Membran mit dem Gas durch flüssiges Wasser verhindert wird.

In einer vorteilhaften Weiterbildung hiervon ist vorgesehen, dass im Bereich der Befeuchtungseinrichtung wenigstens eine für Wasserdampf durchlässige Membran angeordnet ist, welche auf ihrer einen Seite mit dem Wasser und auf ihrer anderen Seite mit dem zum Anodenraum strömenden Gas in Kontakt steht. Der erfindungsgemäße Aufbau erlaubt auch hier den Einsatz einer Membran, was insbesondere dann von Vorteil ist, wenn das Gas, mit welchem der Wasserabscheider druckbeaufschlagt wird, keinen Wasserstoff oder kein wasserstoffhaltiges Gas ist. Beispielsweise bei der Druckbeaufschlagung mit Abgas aus dem Kathodenbereich, mit Sauerstoff oder Stickstoff, stellt dieses einen entscheidenden Vorteil dar, da durch die Membranen lediglich der Wasserdampf in den Bereich des zum Anodenraum strömenden Gases gelangt und eine Vermischung der Gase selbst nicht auftreten kann.

In einer weiteren sehr günstigen und vorteilhaften Ausgestaltung hiervon ist es ferner vorgesehen, dass die Befeuchtungseinrichtung Düsenmittel zum Eindüsen des Wassers in den Anodenraum und/oder den zum Anodenraum strömenden Gasstrom aufweist. Dieser besonders einfache Aufbau zerstäubt das Wasser zu feinem Aerosol, insbesondere unter Ausnutzung des zur Druckbeaufschlagung genutzten Gases. Dies ermöglicht eine sehr einfache und effiziente Befeuchtung, wobei durch die fein verteilten Wassertröpfchen beim Zerstäuben ein Fluten des Anodenraums durch größere Mengen an flüssigem Wasser ebenfalls sicher und zuverlässig verhindert werden kann. Der Aufbau ist dabei außerordentlich effizient, da eine vergleichsweise große Menge an Wasser sehr energieeffizient in dem Anodenraum und/oder dem zum Anodenraum strömenden Gasstrom zerstäubt werden kann.

In einer weiteren sehr vorteilhaften Ausgestaltung der erfindungsgemäßen Vorrichtung ist es ferner vorgesehen, dass die Befeuchtungseinrichtung und/oder der Anodenraum einen Oberflächenbereich zum verbesserten Übergang des Wassers in den zum Anodenraum/im Anodenraum strömenden Gasstrom aufweist. Eine solche Oberflächen kann beispielsweise durch eine geeignete Vergrößerung der Oberfläche über eine entsprechende Rauheit, ein geeignetes Material oder dergleichen so ausgebildet sein, dass der Übergang des Wassers in den zum Anodenraum strömenden Gasstrom oder in das bereits im Anodenraum befindliche Gas entsprechend erleichtert wird.

In einer besonders günstigen und vorteilhaften Weiterbildung hiervon ist es außerdem vorgesehen, dass dieser Oberflächenbereich beheizt ausgebildet ist. Neben dem Übergang beispielsweise durch eine raue Oberfläche, an welcher sich entsprechende Verwirbelungen des Gasstroms bilden, sodass das Wasser leichter aufgenommen und mitgerissen werden kann, kann außerdem eine Beheizung des Oberflächenbereichs ausgebildet sein, sodass alternativ oder ergänzend zur rein mechanischen Aufnahme des Wassers in den Gasstrom ein Erwärmen des Wassers, bis hin zu einem Verdampfen, erfolgen kann. Die Aufnahme des Wassers von dem Gas wird so weiter verbessert.

Weitere vorteilhafte Ausgestaltungen der erfindungsgemäßen Vorrichtung ergeben sich dabei aus den restlichen abhängigen Unteransprüchen und werden anhand des Ausführungsbeispiels deutlich, welches nachfolgend unter Bezugnahme auf die Figuren näher erläutert wird.

Dabei zeigen:
- Fig. 1: eine erste mögliche Ausführungsform der erfindungsgemäßen Vorrichtung;
- Fig. 2: eine zweite mögliche Ausführungsform der erfindungsgemäßen Vorrichtung;
- Fig. 3: eine erste Ausführungsform der Befeuchtungseinrichtung in der erfindungsgemäßen Vorrichtung; und
- Fig. 4: eine zweite Ausführungsform der Befeuchtungseinrichtung in der erfindungsgemäßen Vorrichtung.

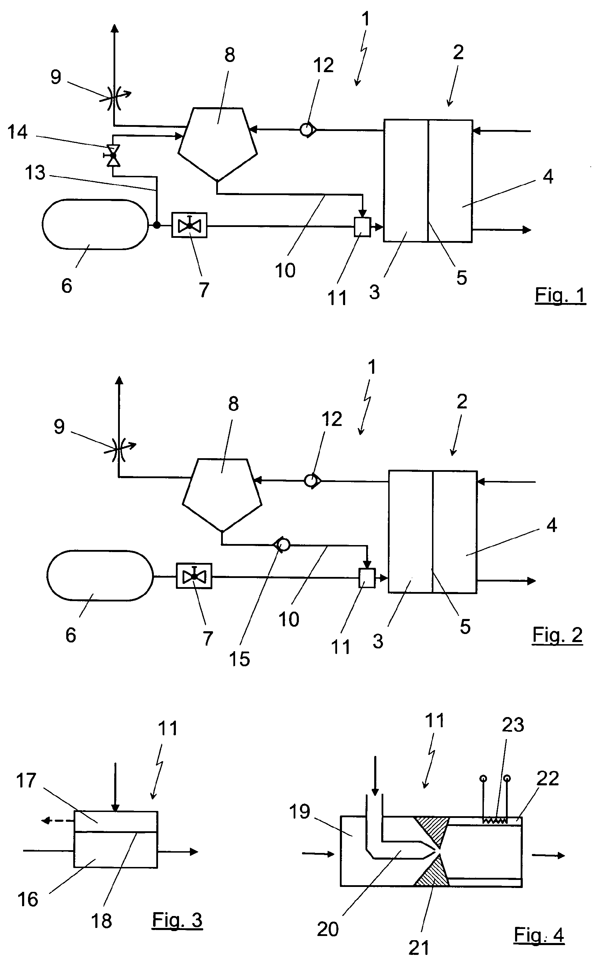

In der Darstellung der Figur 1 ist ein Ausschnitt aus einem Brennstoffzellensystem 1 zu erkennen. Dabei ist die Brennstoffzelle 2 dargestellt, welche als sogenannte PEM-Brennstoffzelle ausgebildet sein soll und typischerweise als Stapel von Einzelzellen aufgebaut ist. Jede der Einzelzellen weist einen Anodenraum 3 und einen Kathodenraum 4 auf, welche in dem hier dargestellten Ausführungsbeispiel beispielhaft angedeutet sind. Anodenraum 3 und Kathodenraum 4 sind über eine protonenleitende Membran (PE-Membran) 5 voneinander getrennt. Dem Kathodenraum 4 wird in an sich bekannter Art und Weise Luft als Sauerstofflieferant zugeführt und ein an Sauerstoff abgereicherter Abluftstrom strömt aus dem Kathodenbereich 4 ab. Dies ist aus dem allgemeinen Stand der Technik bekannt, sodass im Rahmen des hier dargestellten Aufbaus nicht näher darauf eingegangen wird.

Der Anodenraum 3 der Brennstoffzelle 2 wird aus einem Druckgasspeicher 6 über eine Ventileinrichtung 7 zur Druckreduzierung mit Wasserstoff versorgt. Der Druckgasspeicher 6 arbeitet dabei typischerweise auf Druckniveaus von 350 oder 700 bar und versorgt den Anodenraum 3 der Brennstoffzelle 2 mit Wasserstoff in einer vergleichsweise hohen Reinheit. Der Wasserstoff aus dem Druckgasspeicher 6 ist nach der Ventileinrichtung 7 dabei vergleichsweise trocken, sodass es, trotz des typischerweise befeuchteten Zuluftstroms zum Kathodenraum 4 der Brennstoffzelle 2, zu einem Austrocknen zumindest der ersten Zellen oder Zellreihen der Brennstoffzelle 2 im Bereich ihres Anodenraumes 3 kommen kann. Bei der Verwendung einer Brennstoffzelle 2, welche ohne eine sogenannte Anodenloop betrieben wird, also welche entweder als Dead-End-Brennstoffzelle 2 ausgebildet ist, aus welcher kein Gas mehr entweicht, sondern in welcher der gesamte Wasserstoff im Anodenraum 3 aufgebraucht wird, oder als sogenannte Open-End-Brennstoffzelle 2, bei welcher eine gewisse Menge an Restwasserstoff aus dem Anodenbereich 3 austritt, stellt diese Befeuchtung der ersten Zelle beziehungsweise beim Aufbau des Anodenraums 3 in kaskadierter Art der ersten Zellreihe eine entscheidende Herausforderung dar.

Der Aufbau in Figur 1 zeigt dabei den Aufbau der Brennstoffzelle 2 als Open-End-Brennstoffzelle, bei welcher ein Abgasstrom aus dem Anodenraum 3 über einen Wasserabscheider 8 und ein Drosselventil 9 abgeführt wird. Dieser Restwasserstoff gelangt dann entweder an die Umgebung oder kann in einem Brenner, beispielsweise einem katalytischen Brenner, einem Porenbrenner oder dergleichen, nachverbrannt werden, um seinen thermischen Energieinhalt zu nutzen. Der Wasserabscheider 8 im Bereich des Abgasstroms aus dem Anodenraum 3 ist dabei ebenfalls in an sich bekannter Art und Weise ausgeführt und dient zum Abscheiden von flüssigen Wassertröpfchen im Bereich des Abgasstroms. Im unteren Bereich des Wasserabscheiders 8 sammelt sich dieses flüssige Wasser und gelangt über ein Leitungselement 10 in den Bereich einer Befeuchtungseinrichtung 11, um entweder dem Anodenraum 3 direkt und/oder dem zu dem Anodenraum strömenden Gasstrom zugeführt zu werden, um diesen zu befeuchten. Eine Rückströmsicherung 12 ist im Bereich zwischen dem Anodenraum 3 und dem Wasserabscheider 8 angeordnet. Diese Rückströmsicherung 12 kann von dem Abgasstrom aus dem Anodenraum 3 lediglich in Richtung zu dem Wasserabscheider 8 hin durchströmt werden.

Um im Bereich der Befeuchtungseinrichtung 11 nun eine Befeuchtung beispielsweise des zu dem Anodenraum strömenden Gasstroms zu erreichen, ohne hierfür zusätzliche Energie, beispielsweise durch eine Pumpe oder dergleichen aufbringen zu müssen, kann der Wasserabscheider 8 nun über ein Leitungselement 13 mit einer Ventileinrichtung 14 mit unter Druck stehendem Wasserstoff aus dem Druckgasspeicher 6, welcher im Bereich der Ventileinrichtung 7 oder im Bereich vor der Ventileinrichtung 7 abgezweigt wird, beaufschlagt werden. Die Rückströmsicherung 12 verhindert dann, dass der unter Druck stehende Wasserstoff "von hinten" in den Anodenraum 3 der Brennstoffzelle 2 einströmt. Über eine geeignete Einstellung der Drossel 9 kann ein Abströmen von nennenswerten Mengen an Wasserstoff aus dem Brennstoffzellensystem 1 verhindert werden. Der unter Druck stehende Wasserstoff in dem Wasserabscheider 8 wird dann über das Leitungselement 10 das Wasser und zumindest einen Teil des Wasserstoffs in den Bereich der Befeuchtungseinrichtung 11 fördern, in deren Bereich dieses Wasser zur Befeuchtung des Anodenraums 3 und/oder des zu dem Anodenraum 3 strömenden Gasstroms dient. Der Aufbau ist dabei besonders einfach und effizient und kommt lediglich mit einem zusätzlichen Leitungselement 13 und der zusätzlichen Ventileinrichtung 14 aus, ohne dass eine Fördereinrichtung oder dergleichen, welche während des Betriebs des Brennstoffzellensystems 1 Leistung benötigen würde, vorhanden sein muss.

In der Figur 2 ist ein weiterer noch einfacherer Aufbau des Brennstoffzellensystems 1 gezeigt, bei welchem eine vergleichbare Funktionalität realisiert werden kann. Das Leitungselement 13 und die Ventileinrichtung 14 wurden bei dem in Figur 2 dargestellten Aufbau des Brennstoffzellensystems 1 eingespart. Im Bereich des Leitungselements 10 ist dabei eine weitere Rückströmsicherung 15 vorgesehen, welche lediglich in der Richtung von dem Wasserabscheider 8 zur Befeuchtungseinrichtung 11 hin durchströmt werden kann. Die Funktionalität ist ansonsten dieselbe, wobei hier die Förderung des Wassers aus dem Wasserabscheider 8 in den Bereich der Befeuchtungseinrichtung 11 in einen dynamischen Betrieb des Brennstoffzellensystems 1 erfolgt. Gemäß einem ersten Betriebszustand ist dabei der Druck des zu dem Anodenraum 3 strömenden Gases vergleichsweise noch. In dieser Situation wehrt die Rückströmsicherung 15 ein Eindringen dieses Gases in den Bereich des Wasserabscheiders 8 effizient ab. Der Abgasstrom aus dem Anodenraum 3 gelangt über die Rückströmsicherung 12 in den Bereich des Wasserabscheiders. Flüssiges Wasser kann hier abgeschieden werden, eventuelle Restgase können kontinuierlich oder von Zeit zu Zeit über das Drosselventil 9 abgeführt werden. Sinkt nun aufgrund des dynamischen Betriebs der Brennstoffzelle 2 der Druck im Bereich des zu dem Anodenraum 3 strömenden Gases ab, so bildet sich ein Druckgefälle zwischen dem Wasserabscheider 8 und dem Anodenraum 3 aus. In diesen Situationen sperrt die Rückströmsicherung 12, sodass der Abgasstrom aus dem Bereich des Wasserabscheiders 8 nicht zurück in den Anodenraum 3 gelangen kann. Gleichzeitig öffnet die Rückströmsicherung 15 und erlaubt so das Abströmen des Wassers, welches sich im Bereich des Wasserabscheiders 8 angesammelt hat, über das Leitungselement 10 in die Befeuchtungseinrichtung 11. Über die Befeuchtungseinrichtung 11 kann mit dem Wasser aus dem Wasserabscheider 8 dann eine Befeuchtung des Anodenraums 3 und/oder des zu dem Anodenraum 3 strömenden Gasstroms erreicht werden. Da der Betrieb einer Brennstoffzelle 2, insbesondere wenn diese zum Erzeugen von elektrischer Antriebsleistung in einem Fahrzeug eingesetzt wird, typischerweise dynamisch oder hochdynamisch erfolgt, kann so im zeitlichen Mittel über die Betriebsdauer der Brennstoffzelle eine ausreichende Befeuchtung des Anodenraums 3 beziehungsweise des zu dem Anodenraum 3 strömenden Gasstroms sichergestellt werden, insbesondere da ein Austrocknen der befeuchteten Membranen der ersten Zelle oder der ersten Zellreihe eine gewisse Zeit benötigt, sodass zumindest im statistischen Mittel bevor die Membranen ausgetrocknet sind, eine erneute Betriebsphase mit Druckverhältnissen auftritt, welche eine Wiederbefeuchtung des Anodenraums 3 und/oder des zu dem Anodenraum 3 strömenden Gasstroms erlauben.

In der Darstellung der Figur 3 ist eine erste mögliche Ausführungsform der Befeuchtungseinrichtung 11 beispielhaft dargestellt. Diese Befeuchtungseinrichtung 11 besteht aus einem ersten Teilraum 16, welcher von dem zum Anodenraum 3 strömenden Gasstrom durchströmt wird. Ein zweiter Teilraum 17 ist durch eine für Wasserdampf durchlässige Membran 18 vom Teilraum 16 abgetrennt. Im Bereich des Teilraums 17 liegt nun das Wasser aus dem Wasserabscheider 8 vor und kann in diesem Teilbereich 17 beispielsweise verdampft oder zerstäubt werden. Entstehender Wasserdampf kann durch die Membran 18 hindurch in den Teilraum 16 gelangen und so das zu dem Anodenraum 3 strömende Gas befeuchten. Reste können, wie angedeutet, abströmen, sofern erforderlich. Dieser Aufbau ist insbesondere dann von Vorteil, wenn ein Gas zur Druckbeaufschlagung des Wasserabscheiders 8 verwendet wird, welches nicht in den Bereich des Anodenraums gelangen soll, also beispielsweise Sauerstoff, Stickstoff oder ein ähnliches inertes Gas.

In der Darstellung der Figur 4 ist eine alternative Ausführungsform der Befeuchtungseinrichtung 11 zu erkennen. Die Befeuchtungseinrichtung 11 weist dabei einen einzigen Raum 19 auf, welcher von den zu dem Anodenraum 3 strömenden Gasstrom durchströmt wird. Außerdem ist eine Düse 20 vorgesehen, durch welche das Wasser aus dem Wasserabscheider 8 in den Bereich der Befeuchtungseinrichtung 11 gelangt. Durch eine geeignete Auswahl der Düsenform sowie gegebenenfalls einer Blende 21 kann ein Zerstäuben des Wassers im Bereich des zu dem Anodenraum 3 strömenden Gasstroms alleine durch den Druck der Druckbeaufschlagung des Wasserabscheiders 8 und einen sich durch die Blende 21 und die Düse 20 ausbildenden Unterdruck des vorbeiströmenden Gases realisieren lassen. Da hier neben einer Zerstäubung des Wassers außerdem typischerweise das zur Druckbeaufschlagung verwendete Gas mit in den zum Anodenraum strömenden Gasstrom gelangt, ist dieser Aufbau insbesondere dann geeignet, wenn das zur Druckbeaufschlagung des Wasserabscheiders 8 genutzte Gas Wasserstoff ist oder zumindest Wasserstoff enthält. Dieser Wasserstoff kann dann im Bereich des Anodenraums 3 in die Brennstoffzelle bestimmungsgemäß mit umgesetzt werden.

Bei beiden Aufbauten der Befeuchtungseinrichtung 11, sowie anderen aus dem allgemeinen Stand der Technik bekannten Aufbauten von Befeuchtungseinrichtungen 11 kann es ferner vorgesehen sein, dass geeignete Oberflächen 22 beispielsweise mit einer entsprechenden Oberflächenrauheit oder dergleichen im Bereich der Befeuchtungseinrichtung 11 oder auch im Bereich des Anodenraums 3 selbst angeordnet sind, welche eine Aufnahme von im Bereich dieser Oberflächen anhaftendem Wasser durch den die Oberflächen überströmenden Gasstrom des zu dem Anodenraum 3 strömenden oder bereits im Anodenraum 3 befindlichen und hier ebenfalls strömenden Gas erleichtern. Solche Oberflächen 22, welche in Figur 4 beispielhaft dargestellt sind, könnten beispielsweise geeignete Oberflächenrauheiten oder Materialen aufweisen, um einen solchen Effekt zu erzielen. Insbesondere könnten diese Oberflächen 22 auch eine Beheizung aufweisen, beispielsweise eine elektrische Beheizung, wie sie in Figur 4 durch eine prinzipmäßig angedeutete Heizspirale 23 angedeutet ist. Ein solcher Aufbau kann alternativ oder ergänzend zu einer Verbesserung des mechanischen Übergangs des Wassers in den Gasstrom durch die Beheizung ein Erwärmen oder Verdampfen des Wassers erreichen, sodass dieses noch besser von dem vorbeiströmenden Gasstrom aufgenommen werden kann.

Alles in allem stellt das Brennstoffzellensystem gemäß den hier beschreiben Aufbauten eine sehr einfache, effiziente, kompakt aufzubauende und energieoptimierte Variante zur Befeuchtung eines Anodenraums 3 der Brennstoffzelle 2 beziehungsweise des zu dem Anodenraum 3 der Brennstoffzelle 2 strömenden Gases dar. Insbesondere die erste Zelle oder bei einem kaskadiert aufgebauten Brennstoffzellenstack 2 die erste Zellreihe wird somit ausreichend befeuchtet, sodass die elektrische Performance der Brennstoffzelle 2 in allen Betriebssituationen verbessert werden kann.

## Patentansprüche

1. Vorrichtung zur Befeuchtung eines Anodenraums (3) einer Brennstoffzelle (2) und/oder eines zu dem Anodenraum (3) der Brennstoffzelle (2) strömenden Gasstroms, mit einem Wasserabscheider (8) in einem Abgasstrom aus dem Anodenraum (3) und mit einer Befeuchtungseinrichtung (11), welche zur Zufuhr zumindest eines Teils des Wassers zum Anodenraum (3) und/oder dem zum Anoderaum (3) strömenden Gasstrom ausgebildet ist, wobei der Wasserabscheider (8) und die Befeuchtungseinrichtung (11) über ein Leitungselement (10) verbunden sind,
**dadurch gekennzeichnet, dass**
zwischen dem Anodenraum (3) und dem Wasserabscheider (8) eine Rückströmsicherung (12) angeordnet ist, welche in Richtung zu dem Wasserabscheider (8) hin durchströmbar ist, und dass Mittel zur Druckbeaufschlagung des Wasserabscheiders (8) vorgesehen sind, durch welche der Druck im Bereich des Wasserabscheiders (8) zumindest zeitweise über den Druck im Bereich der Befeuchtungseinrichtung (11) anhebbar ist, wobei die Druckbeaufschlagung mittels eines Gases erfolgt, wobei in dem zum Anodenraum (3) strömenden Gasstrom eine Ventileinrichtung (7) angeordnet ist.

2. Vorrichtung nach Anspruch 1,
**dadurch gekennzeichnet, dass**
das Gas Wasserstoff aufweist.

3. Vorrichtung nach Anspruch 1 oder 2,
**dadurch gekennzeichnet, dass**
das Gas der Abgasstrom aus dem Anodenraum (3) ist.

4. Vorrichtung nach Anspruch 1 oder 2,
**dadurch gekennzeichnet, dass**
das Gas aus einem Druckgasspeicher (6) stammt.

5. Vorrichtung nach einem der Ansprüche 1, 2 oder 3,
**dadurch gekennzeichnet, dass**
die Druckbeaufschlagung durch einen zumindest hinsichtlich des Betriebsdrucks dynamischen Betrieb der Brennstoffzelle (2) erfolgt, wozu zwischen Wasserabscheider (8) und Befeuchtungseinrichtung (11) eine Rückströmsicherung (15) angeordnet ist, welche in Richtung zu der Befeuchtungseinrichtung (11) durchströmbar ist.

6. Vorrichtung nach einem der Ansprüche 1 bis 5,
**dadurch gekennzeichnet, dass**
Gas aus dem Wasserabscheider (8) über ein Drosselventil (9) abgeführt ist.

7. Vorrichtung nach einem der Ansprüche 1 bis 6,
**dadurch gekennzeichnet, dass**
im Bereich der Befeuchtungseinrichtung (11) Mittel zum Zerstäuben und/oder Verdampfen des Wassers vorgesehen sind.

8. Vorrichtung nach Anspruch 7,
**dadurch gekennzeichnet, dass**
im Bereich der Befeuchtungseinrichtung (11) wenigstens eine für Wasserdampf durchlässige Membran (18) angeordnet ist, welche auf ihrer einen Seite mit dem Wasser und auf ihrer anderen Seite mit dem zum Anodenraum (3) strömenden Gas in Kontakt steht.

9. Vorrichtung nach Anspruch 7 oder 8,
**dadurch gekennzeichnet, dass**
die Befeuchtungseinrichtung (11) Düsenmittel (20) zum Eindüsen des Wassers in den Anodenraum (3) und/oder den zum Anodenraum (3) strömenden Gasstrom aufweist.

10. Vorrichtung nach einem der Ansprüche 1 bis 9,
**dadurch gekennzeichnet, dass**
die Befeuchtungseinrichtung (11) und/oder der Anodenraum (3) einen Oberflächenbereich (22) zum verbesserten Übergang des Wassers in den zum Anodenraum (3) strömenden Gasstrom aufweist.

11. Vorrichtung nach Anspruch 10,
**dadurch gekennzeichnet, dass**
der Oberflächenbereich (22) beheizt ausgebildet ist.

## Claims

1. Device for humidifying an anode chamber (3) of a fuel cell (2) and / or a gas stream flowing to the anode chamber (3) of the fuel cell (2), having a water separator (8) in an exhaust gas flow from the anode chamber (3) and having a humidifying means (11) which is designed to supply at least part of the water to the anode chamber (3) and / or to the gas stream flowing to the anode chamber (3), wherein the water separator (8) and the humidifying means (11) are connected via a pipe element (10),
**characterised in that**
a backflow prevention element (12) is arranged between the anode chamber (3) and the water separator (8), a flow through the backflow prevention element (12) being possible in the direction of the water separator (8), and means for pressurising the water separator (8) are provided, through which the pressure in the area of the water separator (8) can be raised at least at times above the pressure in the area of the humidifying means (11), wherein the pressurisation is realised by means of a gas, wherein a valve device (7) is arranged in the gas stream flowing to the anode chamber (3).

2. Device according to claim 1,
**characterised in that**
the gas comprises hydrogen.

3. Device according to claim 1 or 2,
**characterised in that**
the gas is the exhaust gas flow from the anode chamber (3).

4. Device according to claim 1 or 2,
**characterised in that**
the gas comes from a pressurised gas storage (6).

5. Device according to one of claims 1, 2 or 3,
**characterised in that**
the pressurisation is realised by an operation of the fuel cell (2) which is dynamic at least with respect to the operating pressure, for which a backflow prevention element (15) is arranged between the water separator (8) and humidifying means (11), a flow being possible in the direction towards the humidifying means (11).

6. Device according to one of claims 1 to 5,
**characterised in that**
gas is removed from the water separator (8) via a restrictor valve (9).

7. Device according to one of claims 1 to 6,
**characterised in that**
in the area of the humidifying means (11), means are provided for atomising and / or evaporating the water.

8. Device according to claim 7,
**characterised in that**
in the area of the humidifying means (11) at least one membrane (18) that is permeable to water vapour is arranged, which is in contact on one side with the water and on its other side with the gas flowing to the anode chamber (3).

9. Device according to claim 7 or 8,
**characterised in that**
the humidifying means (11) has injection means (20) to inject the water into the anode chamber (3) and / or into the gas stream flowing to the anode chamber (3).

10. Device according to one of claims 1 to 9,
**characterised in that**
the humidifying means (11) and / or the anode chamber (3) has / have a surface area (22) for better transition of the water into the gas stream flowing to the anode chamber (3).

11. Device according to claim 10,
**characterised in that**
the surface area (22) is heated.

## Revendications

1. Dispositif destiné à humidifier un espace d'anode (3) d'une pile à combustible (2) et/ou un flux gazeux s'écoulant à partir de l'espace d'anode (3) de la pile à combustible (2), comprenant un séparateur d'eau (8) dans un flux gazeux provenant de l'espace d'anode (3) et comprenant un dispositif d'humidification (11) qui est conçu pour amener au moins une partie de l'eau dans l'espace d'anode (3) et/ou le flux gazeux s'écoulant à partir de l'espace d'anode (3), le séparateur d'eau (8) et le dispositif d'humidification (11) étant reliés par un élément de conduite (10), **caractérisé en ce qu'**entre l'espace d'anode (3) et le séparateur d'eau (8) est disposé un dispositif anti-retour (12) qui peut être parcouru dans la direction du séparateur d'eau (8) et **en ce qu'**il est prévu des moyens destinés à l'application de pression du séparateur d'eau (8), qui permettent d'augmenter la pression dans la zone du séparateur d'eau (8) au moins en partie au-dessus de la pression dans la zone du dispositif d'humidification (11), l'application de pression s'effectuant au moyen d'un gaz, dans le flux gazeux s'écoulant en direction de l'espace d'anode étant disposé un dispositif de soupape (7).

2. Dispositif selon la revendication 1, **caractérisé en ce que** le gaz présente de l'hydrogène.

3. Dispositif selon la revendication 1 ou la revendication 2, **caractérisé en ce que** le gaz est un flux gazeux provenant de l'espace d'anode (3).

4. Dispositif selon la revendication 1 ou la revendication 2, **caractérisé en ce que** le gaz provient d'un accumulateur de gaz sous pression (6).

5. Dispositif selon l'une quelconque des revendications 1, 2 ou 3, **caractérisé en ce que** l'alimentation en pression s'effectue par un fonctionnement dynamique en terme de la pression de fonctionnement de la pile à combustible (2), pour lequel entre le séparateur d'eau (8) et le dispositif d'humidification (11) est disposé un dispositif anti-retour (15) qui peut être parcouru en direction du dispositif d'humidification (11).

6. Dispositif selon l'une quelconque des revendications 1 à 5, **caractérisé en ce que** le gaz est évacué du séparateur d'eau (8) par l'intermédiaire d'une soupape d'étranglement (9).

7. Dispositif selon l'une quelconque des revendications 1 à 6, **caractérisé en ce qu'**il est prévu des moyens de pulvérisation et/ou d'évaporation de l'eau dans la zone du dispositif d'humidification (11).

8. Dispositif selon la revendication 7, **caractérisé en ce que** dans la zone du dispositif d'humidification (11) est disposée au moins une membrane (18) perméable à la vapeur d'eau qui entre en contact avec l'un de ses côtés avec l'eau et avec son autre côté avec le gaz s'écoulant vers l'espace d'anode (3).

9. Dispositif selon la revendication 7 ou la revendication 8, **caractérisé en ce que** le dispositif d'humidification (11) présente un moyen d'injection (20) destiné à injecter de l'eau dans l'espace d'anode (3) et/ou du flux gazeux s'écoulant vers l'espace d'anode (3).

10. Dispositif selon l'une quelconque des revendications 1 à 9, **caractérisé en ce que** le dispositif d'humidification (11) et/ou l'espace d'anode (3) présente une zone de surface (22) destiné à un transfert amélioré de l'eau dans le flux gazeux s'écoulant vers l'espace d'anode (3).

11. Dispositif selon la revendication 10, **caractérisé en ce que** la zone de surface (22) est conçue pour être chauffée.
